# EUROPÄISCHE PATENTSCHRIFT

(11) **EP 1 214 217 B1**
(45) Veröffentlichungstag und Bekanntmachung des Hinweises auf die Patenterteilung: **02.11.2005**
(21) Anmeldenummer: 00964039.2
(22) Anmeldetag: 26.08.2000
(51) Int. Cl.: B60K 35/00

(54) **ANZEIGEEINRICHTUNG**
INDICATING DEVICE
DISPOSITIF INDICATEUR

(30) Priorität: 25.09.1999 DE 19946012
(43) Veröffentlichungstag der Anmeldung: 19.06.2002
(73) Patentinhaber: Bayerische Motoren Werke Aktiengesellschaft, 80809 München (DE)
(72) Erfinder: KÜNZNER, Hermann, 85356 Freising (DE); HEIMRATH, Michael, 82256 Fürstenfeldbruck (DE); RÖSSNER, Swantje, 81545 München (DE); HELLWIG, Volker, 70563 Stuttgart (DE)
(86) Internationale Anmeldenummer: PCT/EP2000/008316
(87) Internationale Veröffentlichungsnummer: WO 2001/023205

(56) Entgegenhaltungen:
- EP-A- 0 939 301
- EP-A- 1 080 975
- EP-A- 1 083 410
- DE-A- 19 755 470
- US-A- 5 523 922

## Beschreibung

Die Erfindung betrifft eine Anzeigeeinrichtung gemäß dem Oberbegriff des Anspruchs 1.

Anzeigeeinrichtungen mit Skalen, die auf grafische Weise Informationen darstellen, werden in allen Bereichen der Technik eingesetzt und informieren Personen über die verschiedensten Zustände von Maschinen und Geräten und über die verschiedensten Bedingungen. Ein sehr enger Anwendungsbereich ist auf dem Fahrzeuggebiet gegeben, wo Fahrzeugbetriebsbedingungen über Anzeigeeinrichtungen dem Fahrzeugbediener vermittelt werden. Die vorliegende Erfindung soll zwar unter Bezugnahme auf dieses Gebiet beschrieben werden, jedoch soll diese Beschreibung nicht einschränkend sein.

Je nach örtlichen Gegebenheiten und Anzeigeumfang steht mehr oder weniger Platz zur Informationsübermittlung zur Verfügung. Bei Fahrzeugen beispielsweise müssen im Bereich der Geschwindigkeitsanzeige durch gestiegene Maximalgeschwindigkeiten immer mehr Skalenpunkte dargestellt werden. Darüber hinaus nimmt der zur Verfügung stehende Platz durch zusätzliche Anzeigeeinrichtungen, wie Drehzahl, Tank, Navigationseinrichtungen, etc. immer mehr ab. Insgesamt werden die Anzeigeeinheiten daher kleiner und lassen sich damit schlechter ablesen. Dies führt insbesondere bei älteren, weitsichtigen Personen oder bei kurzen Blickzuwendungen zu Erkennungsproblemen. Ähnliche Probleme ergeben sich auch in anderen Bereichen, wo allgemein wenig Platz für Anzeigeinstrumente zur Verfügung steht.

Aus der DE 197 55 470 A1 ist ein gattungsgemäßes bildschirmgeneriertes Zeigerinstrument zur eingangsparameterabhängigen Informationsdarstellung bekannt. Bei dem Zeigerinstrument werden Teilstriche der abgebildeten Skala in unterschiedlicher Stärke dargestellt und nach Maßgabe informationsgebender Elemente eine Darstellung einer Skala, eines Zeigers, einer Markierung oder anderer Informationen verändert.

Aufgabe der Erfindung ist es, eine Anzeigeeinrichtung der eingangs genannten Art dahingehend weiterzuentwickeln, daß die davon angezeigten Informationen schnell und sicher aufgenommen werden können.

Diese Aufgabe wird durch die im Anspruch 1 angegebenen Merkmale gelöst.

Ein Kerngedanke der Erfindung liegt darin, die Darstellung der graphischen Informationen in einem Bereich um die aktuelle Position eines Zeigerelements gegenüber der Normaldarstellung zu vergrößern, wobei die Vergrößerung mit zunehmender Entfernung vom Zeigerelement abnimmt.

Als Zeigerelement können beispielsweise normale Zeigernadeln oder auch graphische Zeiger (z.B. Markierungen in der Skala) verwendet werden.

Durch die Hervorhebung wird ein Betrachter automatisch auf den Bereich der Skala gelenkt, in dem sich das Zeigerelement befindet. Damit kann er die von dem Anzeigeelement gelieferte Information besonders schnell und sicher erkennen.

Eine besonders bevorzugte Ausführungsform der Erfindung ist dadurch gekennzeichnet, daß der Bereich, in dem die Hervorhebung stattfindet, in Abhängigkeit von Eingangsinformationen gewählt wird. Insbesondere kann die Größe und die Lage des Bereichs verändert werden. Durch die Veränderung des Bereiches können zusätzliche Informationen, beispielsweise Informationen über anstehende Bewegungen des Zeigerelements, übertragen werden.

Zusätzlich oder alternativ zur Veränderung des Bereichs kann auch die Anzeige der graphischen Information in dem Bereich selbst verändert werden. Diese Veränderungen können vordefiniert oder von Parametern abhängig gemacht werden.

Eine besonders vorteilhafte Ausführungsform läßt sich mit einem Bildschirmdisplay als Anzeigeeinheit realisieren. Auf dem Display können die graphischen Informationen in einfacher Weise verändert werden. Gegenüber einer normalen Ziffernblattanzeige ist es bei einem Display auf einfache Weise möglich, Ziffern oder Buchstaben in vergrößerter Weise, farbig oder verschoben darzustellen. Die Anzeigeeinheit, insbesondere das Bildschirmdisplay, wird von einer Steuereinrichtung angesteuert. Der Steuereinrichtung werden die benötigten Parameter zugeführt, die dann verarbeitet und in verarbeiteter Form zur Anzeigeeinheit weitergeleitet werden.

Eine nützliche Anwendungsweise der Erfindung ist bei einem Fahrzeuginstrument gegeben. Beispielsweise kann der Tachometer in der vorgenannt beschriebenen Weise ausgebildet werden.

Die Erfindung wird nachfolgend und zwar in Bezug auf einen Tachometer und mit Bezugnahme auf die beiliegenden Zeichnungen näher beschrieben. Die Zeichnungen zeigen:
- Fig. 1: ein einfaches schematisches Schaltbild einer Ausführungsform der Erfindung,
- Fig. 2: eine Darstellung eines Tachometers, dessen Skala in erfindungsgemäßer Weise um das Anzeigeelement vergrößert ist.
- Fig. 3a und 3b sowie Fig. 4a und 4b: Darstellungen wie in Fig. 2, wobei, die Bereiche, in denen die Vergrößerungen stattfinden, verändert sind.

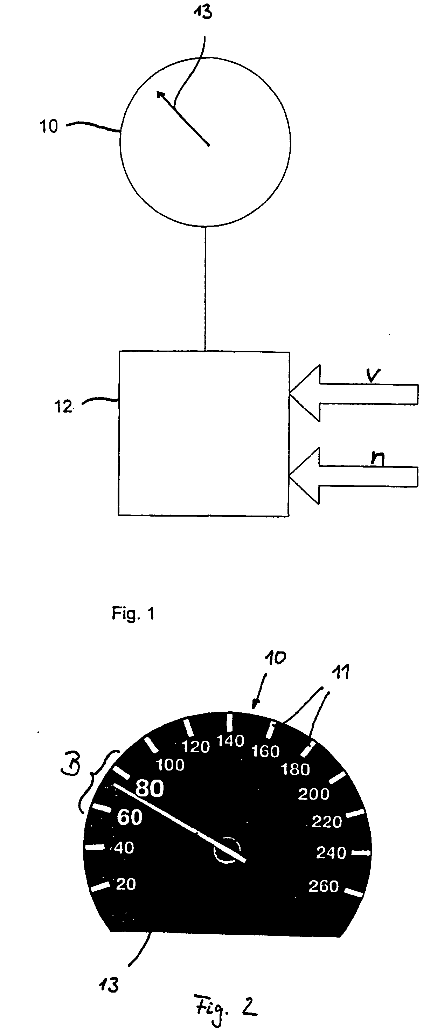

In Fig. 1 ist in schematischer Weise ein Bildschirmdisplay 10 dargestellt, welches mit einer Steuereinrichtung 12 verbunden ist. Die Steuereinrichtung 12 erhält Eingangsinformationen und zwar vorliegend die Fahrzeuggeschwindigkeit v und die Motordrehzahl n.

Auf dem Bildschirmdisplay 10 ist ein Zeiger 13 dargestellt, der die Fahrzeuggeschwindigkeit v auf einer Skala 11 (in Fig. 1 nicht dargestellt) anzeigt. Die Skala 11 weist neben Skalierungsstrichen noch Zahlenangaben auf, die explizit die Geschwindigkeit in km/h angeben. Durch die Erzeugung der Skalierung und der Zahlen auf dem Bildschirmdisplay 10 können die Angaben in allen verschiedenen Größen und Positionen gewählt werden.

Herkömmlicherweise sind alle Angaben über die gesamte Skalierung hinweg in einer einheitlichen Größe angegeben.

In erfindungsgemäßer Weise ist gemäß Fig. 2 ein Bereich B um die aktuelle Position des Zeigers 13 definiert, in dem die Zahlen in vergrößerter Weise dargestellt werden (vgl. Fig. 2). Dabei hängt die Stärke der Vergrößerung vom Abstand der jeweiligen Zahlenangabe von der momentanen Zeigerposition ab. Gemäß Fig. 2 ist die Zahl 80 am größten und die Zahl 60 am zweitgrößten dargestellt. Alle übrigen Zahlenangaben haben Normalgröße. Der Bereich B wird in der Steuereinrichtung 12 auf der Basis der Eingangsparameter v und n ermittelt und ist symmetrisch um die aktuelle Zeigerposition verteilt.

Resultierend durch die Hervorhebung wird der Blick eines Fahrers bei einer kurzen Blickzuwendung zum Tachometer automatisch auf den vergrößerten Bereich gelenkt, so daß er die durch den Zeiger 13 genauer spezifizierte Geschwindigkeitsangabe leicht und schnell erfassen kann.

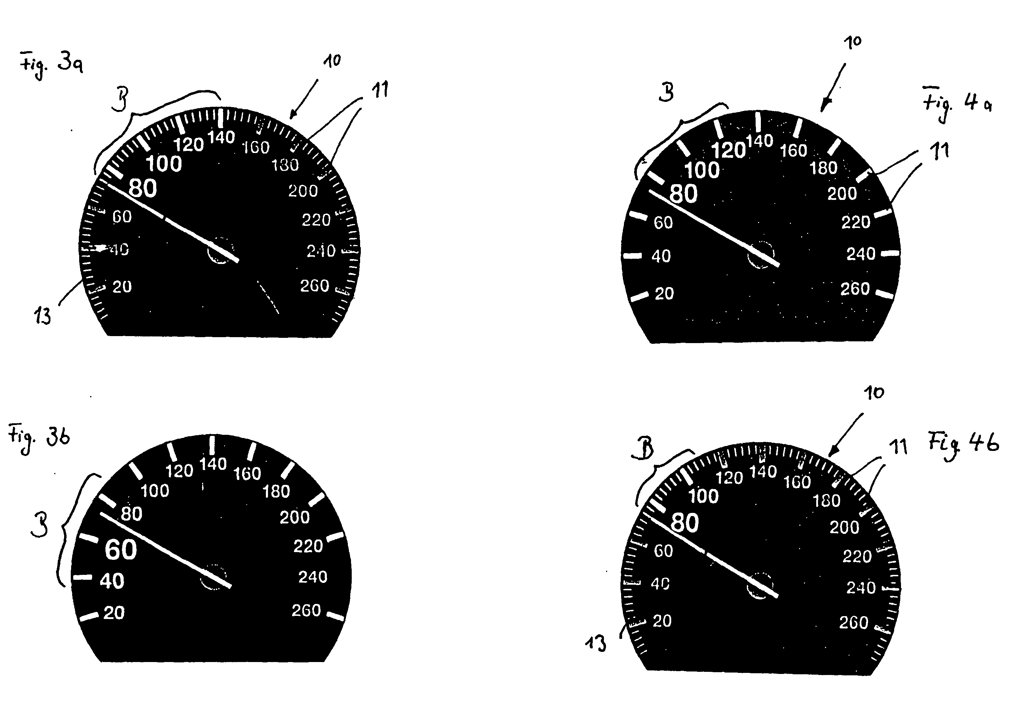

Anhand der Fig. 3a, 3b, 4a und 4b ist dargestellt, wie noch zusätzliche Informationen durch die Wahl des Bereiches der Hervorhebung übermittelbar sind.

Bei Beschleunigungen wird der Bereich zu den größeren Geschwindigkeiten hin verschoben (vgl. Fig. 3a), so daß die Geschwindigkeiten in einem Bereich hervorgehoben werden, zu dem sich der Zeiger 13 hinbewegt. Bei dem Ausführungsbeispiel gemäß Fig. 3a beginnt der Bereich B beim Zeiger 13 und ist zu den höheren Geschwindigkeiten hin orientiert.

Analog wird der Bereich B bei Bremsvorgängen zu geringeren Geschwindigkeiten hin verschoben (vgl. Fig. 3b). Dabei ist wiederum die Stärke der Vergrößerung von dem Abstand der Zahlenangabe zur aktuellen Zeigerposition abhängig. Insgesamt wird bei dem Ausführungsbeispiel gemäß Fig. 3a und 3b der Bereich je nach Fahrdynamik von seiner Lage um die aktuelle Zeigerposition verschoben.

Es kann aber nicht nur die Lage des Bereiches verändert werden. Auch die Erstrekkung bzw. Ausdehnung des Bereiches B ist einstellbar. In Fig. 4a und 4b ist eine Darstellung gewählt, bei der die Größe des Bereiches der Hervorhebung von der Stärke der Beschleunigung abhängt. Bei stärkeren Beschleunigungen (Fig. 4a) wird eine Hervorhebung in einem größeren Bereich B durchgeführt, als bei einer weniger starken Beschleunigung (vgl. Fig. 4b).

Insofern handelt es sich bei einem um die aktuelle Zeigerposition verschobenen Bereich einer Hervorhebung um eine Vorausschau auf eine zukünftige Fahrzeuggeschwindigkeit, so daß eine Rückmeldung über die Größe der Geschwindigkeitsveränderung gegeben werden kann. Besonders deutlich wird diese Rückmeldung, wenn die Skalenstriche zusätzlich zu den Zahlen zur Anzeige der Vorausschau verwendet werden (vgl. beispielsweise Fig. 3a und 4b).

Insgesamt kann bei dem obigen Ausführungsbeispiel auch bei kleiner Anzeigefläche eine wichtige anzuzeigende Information so dargestellt werden, daß sie auch mit kurzer Blickzuwendung aufzunehmen ist. Dies ist auch für weniger gut sehende Personen von besonderem Interesse.

Die vorliegende Erfindung kann überall dort verwendet werden, wo eine einfache und schnelle Informationsvermittlung bei einer Anzeigeeinrichtung wichtig ist. Insofern ist die Erfindung nicht auf das vorliegende Ausführungsbeispiel beschränkt.

## Patentansprüche

1. Anzeigeeinrichtung mit einer von einer Steuereinrichtung (12) angesteuerten Anzeigeeinheit (10), die eine Skala mit graphischen Informationen (11) darstellt und ein Zeigerelement (13) umfasst, das in Abhängigkeit von zumindest einem Eingangsparameter auf eine Position der Skala (11) ausrichtbar ist,
**dadurch gekennzeichnet,**
**dass** die Steuereinrichtung (12) die Darstellung der graphischen Informationen auf der Anzeigeeinheit (10) derart ansteuert, dass sie in einem Bereich (B) um die momentane Position des Zeigerelements (13) gegenüber der Normaldarstellung vergrößert ist und die Vergrößerung mit zunehmender Entfer-nung vom Zeigerelement (13) abnimmt.

2. Anzeigeeinrichtung nach Anspruch 1,
**dadurch gekennzeichnet,**
**dass** der Bereich (B) in Abhängigkeit von Eingangsinformationen (n, v) wählbar ist.

3. Anzeigeeinrichtung nach Anspruch 1 oder 2,
**dadurch gekennzeichnet,**
**dass** die Darstellung der graphischen Informationen innerhalb des Bereichs (B) in definierter Weise wählbar ist.

4. Anzeigeeinrichtung nach einem der vorhergehenden Ansprüche,
**dadurch gekennzeichnet,**
**dass** die Steuereinrichtung (12) die Eingangsparameter (v, n) erhält und mit der Anzeigeeinheit (10) verbunden ist.

5. Anzeigeeinrichtung nach einem der vorhergehenden Ansprüche,
**dadurch gekennzeichnet,**
**dass** als Anzeigeeinheit (10) ein Bildschirmdisplay verwendet ist.

6. Anzeigeeinrichtung nach einem der vorhergehenden Ansprüche,
**dadurch gekennzeichnet,**
**dass** die Anzeigeeinheit (10) in Form eines Rundinstrumentes ausgebildet ist

7. Anzeigeeinrichtung nach einem der vorhergehenden Ansprüche,
**dadurch gekennzeichnet,**
**dass** es sich bei den graphischen Informationen um Buchstaben- und/oder Zahleninformationen handelt.

8. Anzeigeeinrichtung nach einem der vorhergehenden Ansprüche,
**dadurch gekennzeichnet,**
**dass** es sich bei der Anzeigeeinheit (10) um einen Tachometer eines Fahrzeugs handelt.

## Claims

1. An indicating device comprising an indicating unit (10) actuated by a control device (12) and in the form of a scale containing graphic information (11), and also comprising a pointer element (13) which can be aligned with a position on the scale (11) in dependence on at least one input parameter, **characterised in that** the control device (12) so controls the representation of the graphic information on the indicating unit (10) that it is magnified in an area (B) around the instantaneous position of the pointer element (13) relative to the normal
representation and the magnification decreases with distance from the pointer element (13).

2. An indicating device in accordance with claim 1, **characterised in that** the area (B) can be selected in dependence on input information (n, v).

3. An indicating device in accordance with claim 1 or 2, **characterised in that** the representation of the graphic information is selectable in defined manner within the area (B).

4. An indicating device in accordance with any of the preceding claims, **characterised in that** the control device (12) receives the input parameters (v, n) and is connected to the indicating unit (10).

5. An indicating device in accordance with any of the preceding claims, **characterised in that** the indicating unit (10) is a display screen.

6. An indicating device in accordance with any of the preceding claims, **characterised in that** the indicating unit (10) is in the form of a circular instrument.

7. An indicating device in accordance with any of the preceding claims, **characterised in that** the graphic information is in the form of letters and/or numbers.

8. An indicating device in accordance with any of the preceding claims, **characterised in that** the indicating unit (10) is the speedometer of a vehicle.

## Revendications

1. Dispositif d'affichage comportant une unité de visualisation (10), commandée par un dispositif de commande (12), représentant une graduation pourvue d'informations graphiques (11) et pourvue d'un élément indicateur (13) qui peut être dirigé vers une position de la graduation (11) en fonction d'au moins un paramètre d'entrée,
**caractérisé en ce que**
le dispositif de commande (12) ordonne que, dans une zone (B) autour de la position momentanée de l'élément indicateur (13), les informations graphiques soient représentées sur l'unité de visualisation (10) en taille plus grande que normale, et
l'agrandissement est moindre à mesure qu'on s'éloigne de l'élément indicateur (13).

2. Dispositif d'affichage selon la revendication 1,
**caractérisé en ce que**
la zone (B) peut être choisie en fonction d'informations d'entrée (n, v).

3. Dispositif d'affichage selon la revendication 1 ou 2,
**caractérisé en ce que**
la représentation des informations graphiques peut être choisie de façon définie à l'intérieur de la zone (B).

4. Dispositif d'affichage selon l'une des revendications précédentes,
**caractérisé en ce que**
le dispositif de commande (12) obtient les informations d'entrée (v, n) et est relié à l'unité de visualisation (10).

5. Dispositif d'affichage selon l'une des revendications précédentes,
**caractérisé en ce que**
l'unité de visualisation (10) utilisée est un affichage par écran.

6. Dispositif d'affichage selon l'une des revendications précédentes,
**caractérisé en ce que**
l'unité de visualisation (10) est conçue sous forme d'un instrument arrondi.

7. Dispositif d'affichage selon l'une des revendications précédentes,
**caractérisé en ce que**
les informations graphiques sont des informations alphabétiques et/ou numériques.

8. Dispositif d'affichage selon l'une des revendications précédentes,
**caractérisé en ce que**
l'unité de visualisation (10) est un tachymètre d'un véhicule.
